# EUROPÄISCHE PATENTSCHRIFT

(11) **EP 1 147 319 B1**
(45) Veröffentlichungstag und Bekanntmachung des Hinweises auf die Patenterteilung: **22.06.2005**
(21) Anmeldenummer: 00904916.4
(22) Anmeldetag: 14.01.2000
(51) Int. Cl.: F04D 25/02, H02K 9/06

(54) **ELEKTROMOTORISCHER ANTRIEB**
ELECTROMOTIVE DRIVE
ENTRAINEMENT A MOTEUR ELECTRIQUE

(30) Priorität: 27.01.1999 EP 99101472
(43) Veröffentlichungstag der Anmeldung: 24.10.2001
(73) Patentinhaber: SIEMENS AKTIENGESELLSCHAFT, 80333 München (DE)
(72) Erfinder: DIENER, Karl-Friedrich, D-97447 Gerolzhofen (DE); CONRATHS, Hermann-Josef, D-91126 Schwabach (DE); HOPF, Werner, D-90522 Oberasbach (DE); LIENERT, Wolfgang, D-90449 Nürnberg (DE); PITTIUS, Ekkehard, D-91154 Roth (DE); SEITZ, Peter, D-91224 Pommelsbrunn (DE)
(86) Internationale Anmeldenummer: PCT/EP2000/000269
(87) Internationale Veröffentlichungsnummer: WO 2000/045055

(56) Entgegenhaltungen:
- EP-A- 0 050 771
- WO-A-96/37035
- DE-A- 4 229 038
- DE-C- 19 517 959

## Beschreibung

Die Erfindung betrifft einen elektromotorischen Antrieb, mit wenigstens einem von einem Elektromotor antreibbaren Lüfterrad, wobei eine von der Motordrehzahl abhängige elektromagnetische Schlupfkupplung zwischen der Motorwelle und dem frei drehbar gelagerten Lüfterrad angeordnet ist.

Elektromotoren für Schienen- und spurgebundene Fahrzeuge, wie Drehstrom-Bahnmotoren, werden in zunehmendem Maße mit hohen Drehzahlen betrieben, um die Motor-Drehmomente und somit das Motorgewicht wie auch die Bauform klein zu halten. Gemäß der EP 0 826 266 B1 ist zur Motorkühlung ein frei drehbar auf der Motorwelle gelagertes Lüfterrad vorgesehen, wobei eine elektromagnetische Drehzahlbegrenzungs- und Regelungseinrichtung zwischen der Motorwelle und dem Lüfterrad gebildet ist, welche die Kühlluftförderung auf die erforderliche Kühlluftmenge begrenzt und wobei ab einer vorgebbaren Motordrehzahl die Lüfterraddrehzahl gegenüber der Motordrehzahl reduzierbar ist, derart, daß die Mitnahmewirkung der Schlupfkupplung mit steigender Drehzahl der Motorwelle bis beinahe zur Wirkungslosigkeit aufhebbar ist und bei abfallender Motordrehzahl wieder bis auf die volle Mitnahmewirkung zunimmt.

In der älteren europäischen Patentanmeldung EP 930 692 A3 ist ein elektromotorischer Antrieb dieser Art beschrieben, wobei die Schlupfkupplung derart ausgebildet ist, daß die Motorwelle Permanentmagnete trägt und in der Nabe des Lüfterrades Segmente ausgespart sind oder daß das Lüfterrad mit Permanentmagneten versehen ist und die Motorwelle über ihren Umfang segmentartige Aussparungen aufweist, derart, daß im Zusammenwirken der segmentierten Lüfterradnabe mit den Permanentmagneten der Motorwelle bzw. im Zusammenwirken der segmentierten Motorwelle mit den Permanentmagneten des Lüfterrades und abhängig von der Motordrehzahl die Drehzahlbegrenzungs- und Regelungseinrichtung wirksam ist. Diese Schlupfkupplung arbeitet nach dem Reluktanzprinzip.

Aufgabe der Erfindung ist es, einen elektromagnetischen Antrieb der beschriebenen Art bezüglich seiner Eigenbelüftung bzw. Motorkühlung durch wenigstens ein vom Motor antreibbares Lüfterrad weiter zu verbessern.

Erfindungsgemäß wird diese Aufgabe durch die Merkmale des Patentanspruches 1 gelöst. Damit wird erreicht, daß die Kühlluftmenge bei niedrigeren Motordrehzahlen in ausreichendem Maße zur Verfügung steht, während die zu fördernde Kühlluftmenge bei höheren oder hohen Motordrehzahlen nicht mehr proportional zur steigenden Motordrehzahl ansteigt. Dadurch, daß das Lüfterrad erfindungsgemäß im Motorgehäuse bzw. am Lagerschild und damit nicht auf der Motorwelle gelagert ist, ergibt sich stets eine ausreichend hohe Lüfterrad-Lagerdrehzahl, auch bei kleiner oder gegen Null gehender Relativdrehzahl der Motorwelle zum Lüfterrad. Dadurch werden ein besseres Laufverhalten und eine verbesserte Lagerschmierung der Lüfterradlagerung erreicht. Während bei der bekannten Lagerung des Lüfterrades auf der Motorwelle durch den dabei rotierenden Lageraußenring und die Fliehkraft das Schmiermittel zum Außenring gedrückt wird und zu einer erhöhten Lagerreibung führt, steht der Lageraußenring der im Motorgehäuse bzw. im Motorlagerschild angeordneten Lagerung des Lüfterrades still, was die Lagerreibung vermindert. Durch die mechanische Entkopplung des Lüfterrades vom Läufer des Elektromotors werden beispielsweise durch eine Läuferunwucht verursachte Lagerbelastungen verringert.

Nach einer Ausführung der Erfindung ist vorgesehen, daß das mit den Permanentmagneten der Motorwelle oder des Lüfterrades die elektromagnetische Schlupfkupplung bildende elektrisch leitende Teil des Lüfterrades oder der Motorwelle aus einer Hülse aus elektrisch leitfähigem Material besteht. Hiernach erübrigt die einfach auszubildende elektrisch leitfähige Hülse, die in der magnetisch leitfähigen Lüfterradnabe sitzt, eine zusätzliche Käfigwicklung. Die einfach herstellbare Hülse besteht vorzugsweise aus Kupfer.

Gemäß einer weiteren Ausführung kann das Lüfterrad oder die Lüfterradnabe aus nicht magnetischem Material, z.B. Aluminium, bestehen, wobei eine zusätzliche Hülse entfällt. Andererseits kann das Lüfterrad aus Kunststoff ausgeführt werden, wobei in die Kunststoffnabe eine elektrisch leitfähige Hülse, z.B. Kupferhülse, eingesetzt wird. Bei diesen Ausführungen ist eine Gewichtsreduzierung möglich, was für mit hohen Drehzahlen arbeitende Antriebe wichtig ist.

Eine weitere Ausführung zeichnet sich nach der Erfindung dadurch aus, daß für einen Antrieb mit kleiner axialer Baulänge die Teile der elektromagnetischen Schlupfkupplung (Magnete und Käfig) nicht koaxial, sondern radial (Scheibenläuferprinzip) zur Motorwelle angeordnet sind.

Gemäß der Erfindung kann die elektromagnetische Schlupfkupplung so ausgebildet sein, daß die Mitte der Magnete und des Käfigs axial versetzt sind, so daß eine axiale Kraftkomponente erzeugt wird, die auf die Lüfterradlagerung wirkt und eine Taumelbewegung verhindert. Hierbei ist eine Lüfterradlagerung nur mit einem Lager, z.B. einem zweireihigen Lager oder einer Lagerungseinheit, zwischen dem Motorgehäuse bzw. Motorlagerschild und dem Lüfterrad ausführbar.

Die Erfindung umfaßt ferner eine Ausführung gemäß Anspruch 8, deren elektromagnetische Schlupfkupplung nach dem Reluktanzprinzip arbeitet, wobei die Schlupfkupplungsteile auch ohne Käfigwicklung oder Kupferhülse ausführbar sind.

Bei der Ausbildung des elektromagnetischen Teils der Schlupfkupplung sind des weiteren Permanentmagnetpaare durch einen oder mehrere Stabmagnete ersetzbar, welche beispielsweise in Querbohrungen der Motorwelle bzw. in Bohrungen des Lüfterrades einsetzbar sind. Dabei können resultierende Fliehkräfte auf die Magnete vermieden werden und es ist eine einfache Befestigung und Fixierung der Stabmagnete möglich.

Vorteilhafte Ausgestaltungen der Erfindung sind in den weiteren Patentansprüchen angegeben.

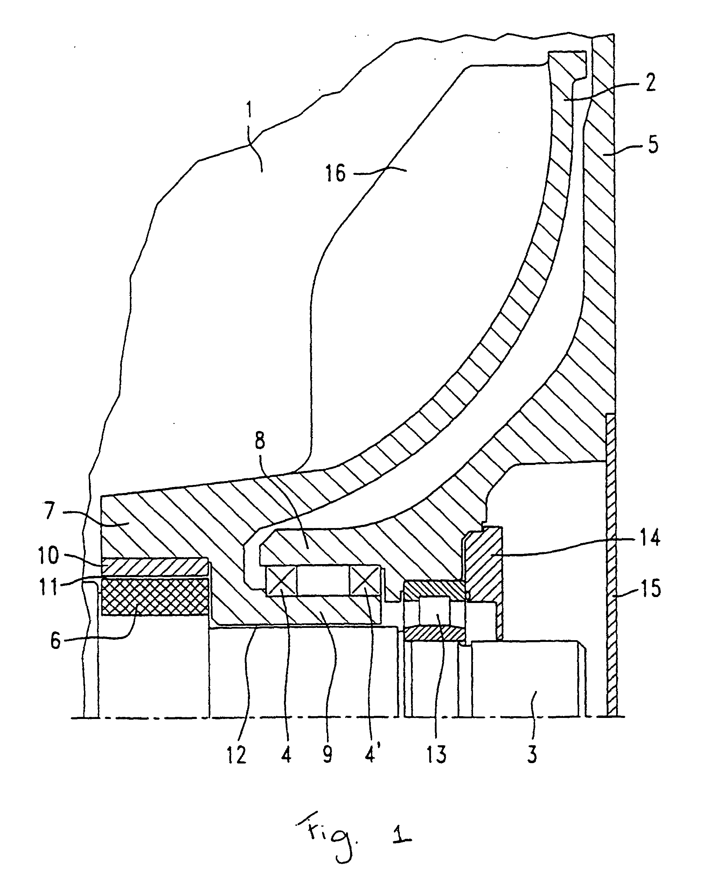

Die Erfindung wird im folgenden an einem Ausführungsbeispiel unter Hinweis auf die Zeichnung erläutert, die einen Teilschnitt durch einen erfindungsgemäßen elektromotorischen Antrieb zeigt, wie er insbesondere für mit hohen Drehzahlen betreibbare Drehstrom-Bahnmotoren geeignet ist.

Von einem an sich bekannten Elektromotor 1 sind vom Motorgehäuse 5 ein Motorlagerschild und ein Motorgehäusedeckel 15, ferner eine Motorwelle 3, ein Motorwellenlager 13, ein Motorwellenlagerdeckel 14 sowie ein Lüfterrad 2 mit einem Lüfterradflügel 16 dargestellt. Nach dem gezeichneten Ausführungsbeispiel ist das Lüfterrad 2 über seine Lüfterradnabe 7 in koaxialer Anordnung zur Motorwelle 3 im Motorgehäuse 5 bzw. im Motorlagerschild frei drehbar gelagert. Die in der dargestellten Ausführung aus zwei Lagern 4, 4' bestehende Lagerung des Lüfterrades 2 sitzt mit ihrem still stehenden Lageraußenring in einer Lageraufnahme 8 des Motorgehäuses 5 bzw. des Motorlagerschildes, wobei sich eine ringförmige Anformung 9 der Lüfterradnabe 7 gegen den drehenden Lagerinnenring des Lüfterradlagers 4, 4' abstützt. Die Lagerung des Lüfterrades kann z.B. wie dargestellt aus zwei Lagern 4, 4' oder einem zweireihigen Lager bzw. einer Lagerungseinheit mit den Lagerreihen 4, 4' bestehen. Der Lagerung wird ferner eine nicht dargestellte, an sich bekannte axiale Fixierung zugeordnet.

Zwischen dem frei drehbar gelagerten Lüfterrad 2 und der Motorwelle 3 befindet sich eine elektromagnetische Drehzahlbegrenzungs- und -Regeleinrichtung für das Kühlluftgebläse. Die als elektromagnetische Schlupfkupplung ausgelegte Einrichtung wirkt in der Weise, daß mit steigender Motordrehzahl, insbesondere ab einem bestimmten Drehzahlbereich, über die Schlupfkupplung die Antriebswirkung auf das Lüfterrad abnimmt. Andererseits bewirkt die Schlupfkupplung bei einer unter einen bestimmten Drehzahlbereich abfallenden Motordrehzahl, daß die Antriebswirkung der Kupplung auf das Lüfterrad wieder zunimmt. Die durch einen vorgebbaren Luftspalt 11 getrennten Teile 6, 10 der elektromagnetischen Schlupfkupplung werden von Magneten 6 bzw. einem Käfig 10 gebildet.

Im gezeichneten Ausführungsbeispiel trägt die Motorwelle 3 Permanentmagnete 6, während das Lüfterrad 2 bzw..die Lüfterradnabe 7 mit einer oder mehreren Kurzschluß- oder Käfigwicklungen 10 bestückt ist. In der Ausführung besteht der Käfig 10 aus einer Kupferhülse, die in die Nabe 7 beispielsweise eines Kunststoff-Lüfterrades 2 einsetzbar ist. Mit 12 ist ein Luftspalt zwischen der Lageranformung 9 der Lüfterradnabe und der Motorwelle 3 bezeichnet.

Gemäß einem nicht dargestellten Ausführungsbeispiel können die Permanentmagnete auch am Lüfterrad und das elektrische Teil 10 des Käfigs an der Motorwelle angeordnet sein. Die magnetische Erregung der Schlupfkupplung erfolgt über die Permanentmagnete und aufgrund der Drehung der Motorwelle 3 bzw. des Lüfterrades 2. Das zur Mitnahme des Lüfterrades erforderliche Drehmoment entsteht durch Induzierung einer elektrischen Spannung im Käfig 10 in gleicher prinzipieller Art wie bei einer Asynchronmaschine mit Käfigläufer. Die Anordnung ist insbesondere so bemessen, daß - abgesehen von eventuellen Reaktionsmomenten - das maximale Moment (Kippmoment) bei einer vorgegebenen Drehzahl erreicht wird, bei der es zur Überwindung des Druckabfalles des aerodynamischen Kreises gerade ausreicht. Diese Drehzahl wird im allgemeinen zwischen 50 und 75 % der höchsten Motordrehzahl liegen. Steigt nun die Motordrehzahl über diesen Wert, so stellt sich aufgrund der Drehmoment-Schlupf-Kennlinie der Kupplung für das Lüfterrad eine niedrigere Drehzahl ein, wodurch Kühlluftmenge, Energieaufwand und Geräusch des Lüfters sinken.

## Patentansprüche

1. Elektromotorischer Antrieb mit wenigstens einem von einem Elektromotor (1) antreibbaren Lüfterrad (2),
- wobei eine von der Motordrehzahl abhängige elektromagnetische Schlupfkupplung zwischen der Motorwelle (3) und dem frei drehbar gelagerten Lüfterrad angeordnet ist,
- wobei eine elektromagnetische Drehzahlbegrenzungs- und Regelungseinrichtung zwischen der Motorwelle (3) und dem Lüfterrad (2) vorgesehen ist, welche die Kühlluftförderung auf die erforderliche Kühlluftmenge begrenzt,
- wobei ab einer vorgebbaren Motordrehzahl die Lüfterraddrehzahl gegenüber der Motordrehzahl reduzierbar ist, derart, daß die Mitnahmewirkung der Schlupfkupplung mit steigender Drehzahl der Motorwelle bis beinahe zur Wirkungslosigkeit aufhebbar ist und bei abfallender Motordrehzahl wieder bis auf die volle Mitnahmewirkung zunimmt
und wobei die Motorwelle (3) Permanentmagnete (6) trägt und die Nabe (7) des Lüfterrades (2) ein elektrisch leitfähiges Teil aufweist oder das Lüfterrad mit Permanentmagneten und die Motorwelle mit einem elektrisch leitfähigen Teil versehen ist
**dadurch gekennzeichnet, dass** das Lüfterrad (2) über eine Lagerung (4, 4') frei drehbar am Motorgehäuse (5) gelagert ist.

2. Elektromotorischer Antrieb nach Anspruch 1, **dadurch gekennzeichnet, daß** das Lüfterrad (2) in einem Motorlagerschild des Motorgehäuses (5) gelagert ist.

3. Elektromotorischer Antrieb nach Anspruch 1 oder 2, **dadurch gekennzeichnet, daß** die Lagerung (4, 4') des Lüfterrades (2) mit einem Lageraußenring in einer Lageraufnahme (8) des Motorgehäuses (5) oder Motorlagerschildes sitzt und sich eine ringförmige Anformung (9) der Lüfterradnabe (7) gegen den drehenden Lagerinnenring des Lüfterradlagers (4, 4') abstützt.

4. Elektromotorischer Antrieb nach Anspruch 1, **dadurch gekennzeichnet, daß** das mit den Permanentmagneten (6) der Motorwelle (3) oder des Lüfterrades (2) die elektromagnetische Schlupfkupplung bildende elektrisch leitende Teil des Lüfterrades oder der Motorwelle aus einer Hülse (10) aus elektrisch leitfähigem Material, wie einer Kupferhülse, besteht.

5. Elektromotorischer Antrieb nach einem der Ansprüche 1 bis 4, **dadurch gekennzeichnet, daß** die Permanentmagnete (6) und/oder die Hülse (10) ringförmig oder abschnittsweise ringförmig an der Nabe (7) des Lüfterrades (2) oder an der Motorwelle (3) angeordnet sind.

6. Elektromotorischer Antrieb nach einem der Ansprüche 1 bis 5, **dadurch gekennzeichnet, daß** das Lüfterrad (2) eine Nabe (7) aus nicht-magnetischem Material, wie Aluminium, aufweist oder daß das Lüfterrad aus Kunststoff besteht und in die Lüfterradnabe eine Hülse (10) aus elektrisch leitfähigem Material eingesetzt ist.

7. Elektromotorischer Antrieb nach einem der Ansprüche 1 bis 6, **dadurch gekennzeichnet, daß** die Teile der elektromagnetischen Schlupfkupplung (6, 10) in koaxialer oder in radialer Anordnung zur Motorwelle (3) angeordnet sind.

8. Elektromotorischer Antrieb nach einem der Ansprüche 1 bis 7, **dadurch gekennzeichnet, daß** die Motorwelle Permanentmagnete trägt und in der Nabe des Lüfterrades Segmente ausgespart sind oder daß das Lüfterrad mit Permanentmagneten versehen ist und die Motorwelle über ihren Umfang segmentartige Aussparungen aufweist, derart, daß im Zusammenwirken der segmentierten Lüfterradnabe mit den Permanentmagneten der Motorwelle bzw. im Zusammenwirken der segmentierten Motorwelle mit den Permanentmagneten des Lüfterrades und abhängig von der Motordrehzahl die Drehzahlbegrenzungs- und Regelungseinrichtung wirksam ist.

9. Elektromotorischer Antrieb nach einem der Ansprüche 1 bis 7, **dadurch gekennzeichnet, daß** die Mitte der Permanentmagnete des einen Teils der Schlupfkupplung gegenüber der Mitte des einen Käfig bildenden anderen Teils der Schlupfkupplung axial versetzt ist.

10. Elektromotorischer Antrieb nach Anspruch 9, **dadurch gekennzeichnet, daß** die Lagerung des Lüfterrades im Motorgehäuse oder im Motorlagerschild aus einem einzigen Lager besteht.

11. Elektromotorischer Antrieb nach einem der Ansprüche 1 bis 10, **dadurch gekennzeichnet, daß** das eine Teil der Schlupfkupplung aus einem oder mehreren in Bohrungen der Motorwelle oder in Bohrungen des Lüfterrades eingesetzten Stabmagneten besteht.

12. Elektromotorischer Antrieb nach einem der Ansprüche 1 bis 11, **dadurch gekennzeichnet, daß** wenigstens ein Lüfterrad (2) für gekapselte oder durchzugsbelüftete Elektromotoren (1) für Schienenfahrzeuge und spurgebundene Fahrzeuge für Saug- oder Druckbelüftung an wenigstens einem Motorlagerschild (5) frei gelagert und ausgebildet ist.

13. Elektromotorischer Antrieb nach einem der Ansprüche 1 bis 12, **dadurch gekennzeichnet, daß** die Teile der elektromagnetischen Schlupfkupplung (6, 10) so bemessen sind, daß das maximale Kippmoment bzw. die höchste Mitnahmewirkung zwischen der Motorwelle (3) und dem Lüfterrad (2) bei einer vorgegebenen Motordrehzahl erreicht wird, die zur Überwindung des Druckabfalles des aerodynamischen Kreises ausreicht

14. Elektromotorischer Antrieb nach einem oder mehreren der Ansprüche 1 bis 13, **dadurch gekennzeichnet, daß** er für mit hohen Drehzahlen betreibbare Drehstrom-Bahnmotoren vorgesehen ist.

## Claims

1. Electromotive drive, with at least one fan wheel (2) which can be driven by an electric motor (1)
- with an electromagnetic slip coupling dependent on the motor speed being arranged between a motor shaft (3) and the freely rotatably mounted fan wheel,
- with an electromagnetic speed limiting and governing device which limits the delivery of cooling air to the required quantity of cooling air being provided between the motor shaft (3) and the fan wheel (2),
- with the fan wheel speed decreasing in relation to the motor speed, when the motor speed exceeds a predetermined level so that the slip coupling becomes increasingly ineffective to engage the fan wheel, and increases again, when the motor speed drops below the predetermined level and the slip coupling increasingly re-engages the fan wheel, and
- with the motor shaft (3) bearing permanent magnets (6), and a hub (7) of the fan wheel (2) has an electrically conductive part, or the fan wheel is provided with permanent magnets and the motor shaft is provided with an electrically conductive part,
**characterized in that**
the fan wheel (2) is supported freely rotatably by a motor casing (5) of the electric motor (1) via a bearing (4, 4').

2. Electromotive drive in accordance with Claim 1, **characterized in that** the fan wheel (2) is mounted in a motor bearing plate of the motor casing (5).

3. Electromotive drive in accordance with Claim 1 or 2, **characterized in that** the mounting (4, 4') of the fan wheel (2) is seated with a bearing outer race in a bearing receptacle (8) of the motor casing (5) or motor bearing plate and an annular formation (9) on the fan wheel hub (7) is supported against the rotating bearing inner race of the fan wheel bearing (4, 4').

4. Electromotive drive in accordance with Claim 1, **characterized in that** the electrically conducting part of the fan wheel or of the motor shaft forming the electromagnetic slip coupling with the permanent magnets (6) of the motor shaft (3) or of the fan wheel (2) comprises a sleeve (10) of electrically conductive material, such as a copper sleeve.

5. Electromotive drive in accordance with one of the Claims 1 to 4, **characterized in that** the permanent magnets (6) and/or the sleeve (10) are arranged in an annular or segmentally annular manner on the hub (7) of the fan wheel (2) or on the motor shaft (3).

6. Electromotive drive in accordance with one of the Claims 1 to 5, **characterized in that** the fan wheel (2) has a hub (7) of non-magnetic material, such as aluminium, or **in that** the fan wheel consists of plastic and a sleeve (10) of electrically conductive material is fitted into the fan wheel hub.

7. Electromotive drive in accordance with one of the Claims 1 to 6, **characterized in that** the parts of the electromagnetic slip coupling (6, 10) are arranged coaxially or radially in relation to the motor shaft (3).

8. Electromotive drive in accordance with one of the Claims 1 to 7, **characterized in that** the motor shaft bears permanent magnets and segments are cut out in the hub of the fan wheel, or **in that** the fan wheel is provided with permanent magnets and the motor shaft has segmental cutouts over its circumference in such a way that, in the interaction of the segmented fan wheel hub with the permanent magnets of the motor shaft, or in the interaction of the segmented motor shaft with the permanent magnets of the fan wheel, and dependent on the motor speed, the speed limiting and governing device is effective.

9. Electromotive drive in accordance with one of the Claims 1 to 7, **characterized in that** the centre of the permanent magnets of one part of the slip coupling is axially offset in relation to a centre of the other part of the slip coupling, forming a cage.

10. Electromotive drive in accordance with Claim 9, **characterized in that** the mounting of the fan wheel in the motor casing or in the motor bearing plate comprises a single bearing.

11. Electromotive drive in accordance with one of the Claims 1 to 10, **characterized in that** one part of the slip coupling comprises one or more bar magnets fitted in bores of the motor shaft or in bores of the fan wheel.

12. Electromotive drive in accordance with one of the Claims 1 to 11, **characterized in that** at least one fan wheel (2) for encapsulated or enclosed-ventilated electric motors (1) for rail vehicles and rail-bound vehicles for suction or pressure ventilation is freely mounted and formed on at least one motor bearing plate (5).

13. Electromotive drive in accordance with one of the Claims 1 to 12, **characterized in that** the parts of the electromagnetic slip coupling (6, 10) are dimensioned such that the maximum breakdown torque or the highest driving-along effect between the motor shaft (3) and the fan wheel (2) is reached at a predetermined motor speed, which is sufficient to overcome the drop in pressure of the aerodynamic circuit.

14. Electromotive drive in accordance with one or more of the Claims 1 to 14, **characterized in that** it is intended for three-phase traction motors capable of being operated at high speeds.

## Revendications

1. Entraînement à moteur électrique, comprenant au moins une roue de ventilateur (2), pouvant être entraînée par un moteur électrique (1),
- dans lequel un accouplement à induction électromagnétique, dépendant de la vitesse de rotation du moteur, est disposé entre l'arbre du moteur (3) et la roue du ventilateur, montée folle,
- dans lequel un dispositif de limitation de la vitesse de rotation et de régulation électromagnétique est prévu entre l'arbre du moteur (3) et la roue du ventilateur (2), lequel limite l'acheminement d'air de refroidissement à la quantité d'air de refroidissement indispensable,
- dans lequel, à partir d'une vitesse de rotation de moteur pouvant être prédéterminée, la vitesse de rotation de la roue du ventilateur peut être abaissée vis-à-vis de la vitesse de rotation du moteur, de telle sorte que l'effet d'entraînement de l'accouplement à induction peut être compensé par l'augmentation de la vitesse de rotation de l'arbre du moteur, jusqu'à devenir presque sans effet et augmente à nouveau, lorsque la vitesse de rotation du moteur diminue, jusqu'à atteindre un effet d'entraînement total et
- dans lequel l'arbre du moteur (3) supporte des électro-aimants (6) et le moyeu (7) de la roue du ventilateur (2) présente une partie électro-conductrice ou la roue du ventilateur est munie d'aimants permanents et l'arbre du moteur d'une partie électro-conductrice,
**caractérisé en ce que** la roue du ventilateur (2) est montée folle sur le carter du moteur (5), par l'intermédiaire de paliers (4, 4').

2. Entraînement à moteur électrique selon la revendication 1, **caractérisé en ce que** la roue du ventilateur (2) est montée folle dans un flasque de moteur du carter du moteur (5).

3. Entraînement à moteur électrique selon la revendication 1 ou 2, **caractérisé en ce que** les paliers (4, 4') de la roue du ventilateur (2) se situent, avec une bague extérieure, dans un logement de paliers (8) du carter du moteur (5) ou du flasque du moteur et qu'une configuration en forme d'anneau (9) du moyeu (7) de la roue du ventilateur s'appuie sur la bague intérieure en rotation du palier de la roue du ventilateur (4, 4').

4. Entraînement à moteur électrique selon la revendication 1, **caractérisé en ce que** la partie électro-conductrice de la roue du ventilateur ou de l'arbre du moteur, qui forme, avec les aimants permanents (6) de l'arbre du moteur (3) ou de la roue du ventilateur (2), l'accouplement à induction électromagnétique, se compose d'un manchon (10) en matériau électro-conducteur, tel qu'un manchon en cuivre.

5. Entraînement à moteur électrique selon l'une des revendications 1 à 4, **caractérisé en ce que** les aimants permanents (6) et / ou le manchon (10) sont disposés en forme de bague ou par segments en forme de bague sur le moyeu (7) de la roue du ventilateur (2) ou sur l'arbre du moteur (3).

6. Entraînement à moteur électrique selon l'une des revendications 1 à 5, **caractérisé en ce que** la roue du ventilateur (2) a un moyeu (7) en matériau amagnétique, tel que de l'aluminium ou que la roue du ventilateur est en matière plastique et qu'un manchon (10) en matériau électro-conducteur est mis en oeuvre dans le moyeu de la roue du ventilateur.

7. Entraînement à moteur électrique selon l'une des revendications 1 à 6, **caractérisé en ce que** les pièces de l'accouplement à induction électromagnétique (6, 10) sont disposées en un agencement coaxial ou radial, par rapport à l'arbre du moteur (3).

8. Entraînement à moteur électrique selon l'une des revendications 1 à 7, **caractérisé en ce que** l'arbre du moteur supporte des aimants permanents et que des segments sont évidés dans le moyeu de la roue du ventilateur ou que la roue du ventilateur est munie d'aimants permanents et que l'arbre du moteur présente des évidements, de type segment, à sa périphérie, de telle sorte que le dispositif de limitation de vitesse de rotation et de régulation est actif, lorsque le moyeu de la roue du ventilateur, segmenté, coopère avec les aimants permanents de l'arbre du moteur ou lorsque l'arbre du moteur, segmenté, coopère avec les aimants permanents de la roue du ventilateur et en fonction de la vitesse de rotation du moteur.

9. Entraînement à moteur électrique selon l'une des revendications 1 à 7, **caractérisé en ce que** le milieu des aimants permanents de l'une des parties de l'accouplement à induction est décalé axialement par rapport au milieu de l'autre partie de l'accouplement à induction, qui forme une cage.

10. Entraînement à moteur électrique selon la revendication 9, **caractérisé en ce que** les paliers de la roue du ventilateur, situés dans le carter du moteur ou dans le flasque du moteur, se composent d'un seul palier.

11. Entraînement à moteur électrique selon l'une des revendications 1 à 10, **caractérisé en ce que** l'une des parties de l'accouplement à induction se compose d'un ou de plusieurs barreaux magnétiques, mis en oeuvre dans des trous de l'arbre du moteur ou dans des trous de la roue du ventilateur.

12. Entraînement à moteur électrique selon l'une des revendications 1 à 11, **caractérisé en ce qu'**au moins une roue de ventilateur (2) est montée librement et constituée pour des moteurs électriques blindés ou blindés ventilés (1) pour des véhicules sur rails et des véhicules guidés sur rails pour une ventilation d'aspiration ou de refoulement sur au moins un flasque de moteur (5).

13. Entraînement à moteur électrique selon l'une des revendications 1 à 12, **caractérisé en ce que** les pièces de l'accouplement à induction électromagnétique (6, 10) sont dimensionnées, de sorte que le couple de renversement maximum o u l'effet d'entraînement maximum est atteint entre l'arbre du moteur (3) et la roue du ventilateur (2), dans le cas d'une vitesse de rotation du moteur prédéterminée, qui suffit pour vaincre la chute de pression du circuit aérodynamique.

14. Entraînement à moteur électrique selon une ou plusieurs des revendications 1 à 13, **caractérisé en ce qu'**il est prévu pour des moteurs de traction à courant triphasé, pouvant être exploités à de grandes vitesses de rotation.
